# EUROPEAN PATENT APPLICATION

(11) **EP 3 647 175 A1**
(43) Date of publication of application: **06.05.2020**
(21) Application number: 18203211.0
(22) Date of filing: 29.10.2018
(51) Int. Cl.: B62M 6/55, B62M 9/136, B62J 13/02, B62M 9/00

(54) **DRIVE SYSTEM FOR AN ELECTRIC BICYCLE**

(71) Applicant: Miranda & Irmão Lda., 3754-909 Águeda (PT)
(72) Inventor: Tavares Miranda, Joao Filipe, 3754-909 Agueda (PT)
(74) Representative: Freischem & Partner Patentanwälte mbB

(57) **Abstract**

The invention relates to a drive system for an e-bike comprising a drive unit and a chainring driven by the drive unit, the drive system comprising a chain guide member for limiting the radial movement of the chain to prevent a chain from jumping off the chainring, the chain guide member being attached to the drive unit.

## Description

The invention relates to a drive system for an e-bike.

E-bikes differ from conventional bicycles in that they have an electric drive. The electric drive acts on a chainring, which in turn transmits the drive power via the chain to the rear wheel of the two-wheeler. The construction of such an e-bike differs significantly from that of a conventional bicycle. In particular, it is regularly necessary to place a drive unit that drives the chainring in the area of the bottom bracket. This significantly changes the design of the frame of the bicycle in this area.

Especially when riding off-road, the problem with conventional bicycles was that the chain would not jump off the chainring. In the past, chain guide elements were developed for this purpose, which are fastened to the seat tube of the frame using a clamp, for example. These chain guide elements have roller or cage-like constructions through which the chain is fed to the chainring.

The problem that the chain can jump off the chainring is also a problem with e-bikes. There, however, conventional chain guide elements are regularly incompatible with the e-bike. This is due to the different design of the frame described above, with which conventional chain guide elements are no longer compatible. In addition, the drive unit takes up a certain amount of space in the area of the bottom bracket, so that conventional chain guide elements often cannot be attached sensibly to the frame of the e-bike.

The invention is therefore based on the task of providing a drive system for an e-bike in which a chain guide element prevents the chain from jumping off the chainring.

The task is solved by a drive system for an e-bike with the features of claim 1. The features of the dependent claims concern advantageous designs.

The invented drive system has a chain guide element to prevent the chain from jumping off the chainring. The chain guide element limits the movement of the chain in the radial direction. Here the radial direction is related to the chainring. The chainring is driven by a drive unit and the chain guide element is attached to the drive unit. It has been shown that by fastening the chain guide element directly to the drive unit, a space-saving construction of the chain guide element is possible, which can also be realised in the limited space around the bottom bracket, as is often the case with e-bikes. In addition, the attachment of the chain guide element to the drive unit has the advantage that the frame of the e-bike around the drive unit can be designed completely independently of the question of the attachment of a chain guide element. This freedom of design with regard to the frame is particularly important for e-bikes, as a battery must also be accommodated in a suitable location for e-bikes. Here, especially areas are popular in which the down tube or seat tube is arranged in conventional diamond frames of bicycles.

The drive unit may be a motor housed in a housing and/or a gearbox housed in a housing. It is particularly advantageous if both the electric motor and the gearbox are accommodated in the housing. In this case, the common housing enables a space-saving and compact design.

The chain guide element can be attached to the housing. There is a certain freedom of design with regard to the shape of the housing. It is therefore possible to design the housing in such a way that it has suitable surface areas for the attachment of attachments such as a chain guide element.

The housing may be a cast housing. Casting processes used in the manufacture of such housings allow complex geometries to be easily represented. The material of the housing may be a metallic material, in particular an aluminium alloy. Such metallic materials have a high mechanical load capacity so that the reaction forces generated by the drive unit driving the chain wheel can be absorbed via the housing and introduced into the frame of the e-bike.

The housing may have a thread cut into the material of the housing. The chain guide element can be fastened with a screw in this thread. It is understood that the housing may also have a plurality of cut threads in which the chain guide element is fastened with a plurality of screws. By screwing the screw into a thread cut directly into the casting material, several advantages are realized at the same time. On the one hand, the connection is detachable, i.e. a damaged chain guide element can be easily replaced. Furthermore, the fastening is simple and light in design. No nuts, clamps or similar components are required to fasten the chain guide element. Finally, the fastening can be designed to save space, which is particularly advantageous in the limited space between the drive unit and the chainring.

The chain guide element can have a flat fastening section. A flat mounting section can also be arranged in a confined space between the drive unit and chainring. In this context, it is particularly advantageous if the flat fastening section extends, at least essentially, parallel to the chainring.

The chain guide element can have a radial boundary section. It has been shown that complex guide elements, such as rollers or cage-like constructions, are not absolutely necessary to prevent the chain from jumping off. It is sufficient if a material area of the chain guide element forms a section which extends into the plane of the chainring, so that a barrier for the chain is present starting from the chainring in the radial direction.

The chain guide element can be spaced from the chain in the radial direction. The radial direction in this context also refers to the chainring. This applies in the vibration-free state of the drive system. In particular, the radial boundary section of the chain guide element in the vibration-free state of the drive system is distanced from the chain in the radial direction. It has been shown that in order to prevent the chain from jumping off the chainring, permanent contact between the chain guide and the chain, especially between the radial boundary section and the chain, is not necessary. It is sufficient that the chain only strikes the chain guide element, in particular the radial boundary section, when the drive system is exposed to strong vibrations which lead to a corresponding movement of the chain. The advantage of the distance is that there is no additional friction between the chain guide element and the chain.

The radial boundary section can be flat. A flatly designed boundary section has the advantage that, starting from the chainring, it only takes up a small amount of installation space - in particular according to its thickness. The boundary section can also be curved in the circumferential direction of the chainring. In the angular range spanned by the boundary section, the entire section thus has a constant distance to the chainring. In particular, the surface facing the chainring may have a curvature in the circumferential direction. In particular, the curvature is an arc-shaped curvature with the center of the chainring as the center of the arc.

The radial boundary section can advantageously have a thickness of at least 0,5mm, especially at least 1mm, and/or at the most 5mm, especially at the most 1mm.

The chain guide may have a flat connecting section connecting the fastening section to the radial boundary section.

Such a flat connecting section has the advantage that it is rigid due to its flat design, but fits into the narrow space available between the drive unit and the chainring.

The radial boundary section can have a thickness of at least 1mm, especially at least 2,3mm and/or at most 5mm, especially at most 4mm.

The drive system may have a chain guard ring. Such chain guard rings are used to protect the chainring and/or the rider's clothing. The chainring may have an external diameter at least approximately equal to the distance of the radial boundary section from the centre of the chainring. In such an arrangement, a gap is preferably formed in the circumferential direction of the chainring, in particular laterally offset next to the plane of the chainring. In particular, the gap is narrower than the chain of the e-bike.

The chain guard ring can have a thickness of at least 1mm, especially at least 2,3mm, and/or at most 5mm, especially at most 4mm.

The material of the chain guide element and/or the chain guard ring may be plastic. Alternatively and/or additionally, the chain guide element and/or the chain guard ring can be an injection-moulded part. The parts in question can be manufactured cost-effectively from this material or according to this manufacturing process. It has turned out that, especially in the case of the chain guide element design described above, a plastic allows to design a sufficiently stable chain guide element despite its low strength compared to metals, for example. A plastic chain guide element can therefore be designed to be particularly light and cost-effective. The same applies to the chain guard ring. The material of the chain guide element and/or the chain guard ring can alternatively be metal parts, in particular aluminium parts. The alumium parts can also be injection-moulded.

Further practical forms of implementation and advantages of the invention are described below in connection with the drawings.
- Fig. 1: shows a view of an exemplary drive system.
- Fig. 2: shows the chain guide element attached to the drive unit as shown in Figure 1.
- Fig. 3: shows the chain guide element from Fig. 1 and 2.
- Fig. 4: shows the chain guide element from Fig. 1 and 3.

The drive system 10 has a drive unit 12. The drive unit 12 can, as in the example shown, be an electric motor and a gearbox arranged in a housing 14. Furthermore, the drive system 10 has a chainring 16, which is driven by the drive unit 12. For this purpose the drive unit 14 is connected to the chainring 16 via the shaft 18.

The exemplary drive system 10 now has a chain guide element 20. The chain guide element 20 can be attached to the housing 14 of the drive unit 12 as shown in the example. In addition, the drive system 10 has a chain guard ring 22. This can be attached to the chainring 16 as shown in the example.

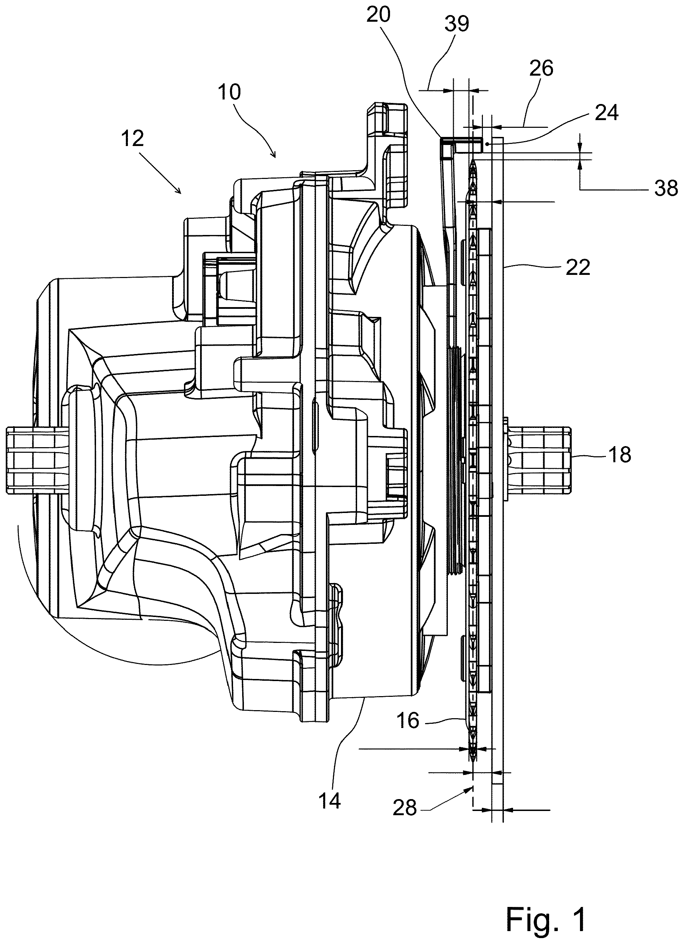

A gap 24 with a gap width of 26 can be formed between the chain guard ring 22 and the chain guide element 20. As shown in Figure 1, a gap 24 can be located laterally to plane 28.

In particular, the width of the gap shall be at least 1mm, especially at least 2,4mm, and/or at most 5,5mm, especially at most 4mm. In such an arrangement, the chain guard ring and the chain guide element work together to prevent the chain from jumping off.

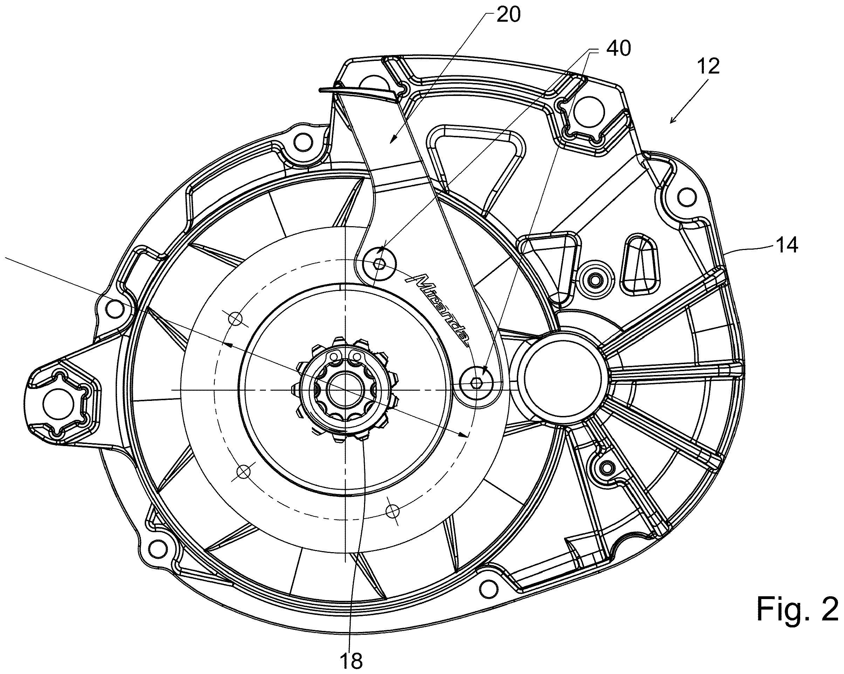

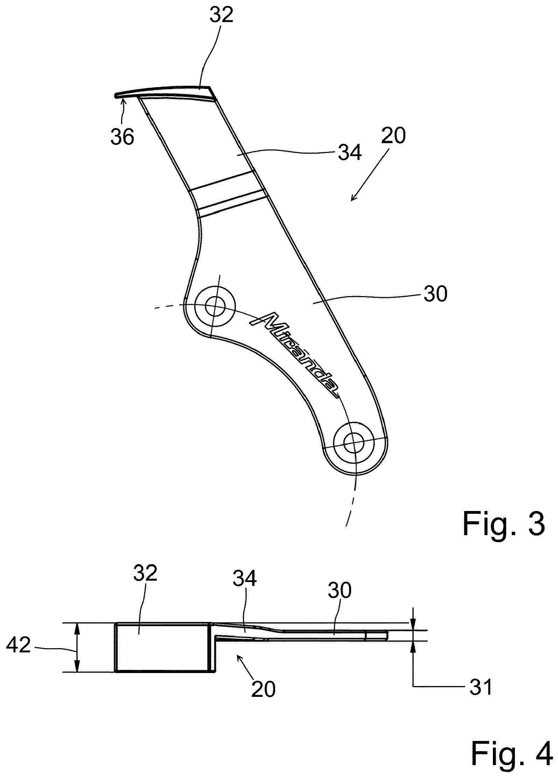

As shown particularly in Figures 2 and 3, the chain guide 20 may have a fastening section 30 for fixing the chain guide 20 to the drive unit 12. The fastening section 30 may be flat with a thickness 31.

It is advantageous that the fastening section 30 has a thickness 31 of at least 1mm, especially at least 2,3mm, and/or at most 5mm, especially at the most 4mm.

Furthermore, the chain guide element 20 can have a radial boundary section 32. The fastening section 30 and the boundary section 32 may be connected by a connecting section 34.

As in the example shown, the boundary section 30, the connecting section 34 and the boundary section 32 can be flat.

Preferably the underside 36, which is the surface of the boundary section 32 pointing to the chainring 16, is curved in the circumferential direction of the chainring 16. Preferably the underside shows a distance 38 of at least 0,5mm, in particular of at least 1mm, and/or at most 4mm. especially at most 3,5mm, to the tips of the teeth.

In the area of the connection between the boundary section 32 and the connecting section 34, the connecting section 34 has a distance 39 from the chainring. This distance can be at least 1mm, especially at least 3mm, and/or at most 5mm, especially at most 4mm.

The chain guide element 20 can be fastened to the drive unit 12 with fastening elements 40 as shown in the example. The fastening elements 40 can be screws, especially those screwed into threads cut into the material of the housing 14 of the drive unit 12.

The boundary section 32 may have a width of at least 1mm, in particular at least 3mm, and/or at most 5mm, in particular at most 4mm.

The features of the invention disclosed in the present description, in the drawings and in the claims may be essential both individually and in any combination for the realisation of the invention in its various forms. The invention is not limited to the described embodiments. It may be varied within the limits of the requirements and taking into account the knowledge of the competent person.

### Reference character list

- 10: drive system
- 12: drive unit
- 14: housing
- 16: chain ring
- 18: shaft
- 20: Chain guide element
- 22: chain guard ring
- 24: gap
- 26: gap width
- 28: plane
- 30: fastening section
- 31: thickness
- 32: boundary section
- 34: connecting section
- 36: rear side
- 38: distance
- 39: distance
- 40: fastening element
- 42: width

## Claims

1. A drive system (10) for an e-bike comprising a drive unit (12) and a chainring (16) driven by the drive unit (12), the drive system (10) including a chain guide member (20) for limiting radial movement of the chain in order to prevent a chain from jumping off the chainring (16), the chain guide member (20) being attached to the drive unit (12).

2. Drive system (10) according to Claim 1, **characterized in that** the drive unit (12) is an electric motor accommodated in a housing (14) and/or a gearbox accommodated in a housing (14).

3. Drive system (10) according to claim 1 or 2, **characterized in that** the chain guide element (20) is fastened to the housing (14).

4. Drive system (10) according to one of the preceding claims, **characterized in that** it is a housing (14) made of a cast material.

5. Drive system (10) according to one of claims 2 to 4, **characterized in that** the housing (14) has a thread cut into the material of the housing (14) and the chain guide element (20) is fastened to the housing (14) by a screw screwed into this thread.

6. Drive system (10) according to one of the preceding claims, **characterized in that** the chain guide element (20) has a flat fastening section (30), in particular the fastening section (30) extending at least substantially parallel to the chainring (16).

7. A drive system (10) according to one of the preceding claims, **characterised in that** the chain guide member (20) has a radial boundary section (32) for limiting the radial movement of the chain.

8. Drive system (10) according to one of the preceding claims, **characterized in that** the chain guide element (20) in the vibration-free state of the drive system (10) is spaced apart from the chain and/or the tips of the teeth of the chain ring (16) in the radial direction.

9. Drive system (10) according to one of the preceding claims, **characterized in that** the radial boundary section (32) is at least in general, flat and/or curved in the circumferential direction of the chainring (16).

10. A drive system (10) according to one of the preceding claims, **characterized in that** the chain guide member (20) comprises a flat connecting section (34) connecting the fastening section (30) to the radial boundary section (32).

11. Drive system (10) according to one of the preceding claims, **characterized in that** the drive system (10) has a chain guard ring (22), in particular a gap (24) being formed between the chain guard ring (22) and the chain guide element (20).

12. Drive system (10) according to one of the preceding claims, **characterized in that** the chain guide element (20) and/or the chain guard ring (22) is an injection-moulded part.

13. Drive system (10) according to one of the preceding claims, **characterized in that** the material of the chain guard element (20) and/or the chain guard ring (22) is a plastic material.
